# EUROPÄISCHE PATENTANMELDUNG

(11) **EP 0 574 802 A1**
(43) Veröffentlichungstag der Anmeldung: **22.12.1993**
(21) Anmeldenummer: 93109176.3
(22) Anmeldetag: 08.06.1993
(51) Int. Cl.: C08G 18/08, C09J 175/06

(54) **Verwendung von wässrigen Polyurethandispersionen als Klebstoffe**

(30) Priorität: 13.06.1992 DE 4219418
(71) Anmelder: BASF Aktiengesellschaft, D-67063 Ludwigshafen (DE)
(72) Erfinder: Haeberle, Karl, Dr., D-6730 Neustadt (DE); Wistuba, Eckehardt, Dr., D-6702 Bad Duerkheim (DE); Fricke, Hans-Joachim, D-6716 Dirmstein (DE); Aydin, Oral, Dr., D-6800 Mannheim 1 (DE); Kokel, Nicolas, Dr., D-6700 Ludwigshafen (DE); Licht, Ulrike, Dr., D-6800 Mannheim 25 (DE)

(57) **Zusammenfassung**

Verwendung einer wäßrigen Dispersion, enthaltend ein Polyurethan, welches im wesentlichen aufgebaut ist aus Polyisocyanaten, Dihydroxylverbindungen mit einem Molekulargewicht zwischen 400 und 6000 g/mol, Kettenverlängerern und gegebenenfalls Vernetzern mit mindestens 2 gegenüber Isocyanat reaktiven Gruppen und einem Molekulargewicht unter 400 g/mol und hydrophilen, dispergieraktiven Verbindungen mit mindestens einer gegenüber Isocyanat reaktiven Gruppe und welches dadurch gekennzeichnet ist, daß es sich bei mindestens 70 Gew.-% der Dihydroxylverbindungen mit einem Molekulargewicht zwischen 400 und 6000 g/mol um Polyesterdiole handelt, bei denen mindestens 30 Mol% der zum Aufbau der Polyesterdiole eingesetzten Dicarbonsäuren aromatische Dicarbonsäuren sind, als Klebstoff

## Beschreibung

Die Erfindung betrifft die Verwendung einer wäßrigen Dispersion, enthaltend ein Polyurethan, welches im wesentlichen aufgebaut ist aus Polyisocyanaten, Dihydroxylverbindungen mit einem Molekulargewicht von 400 bis 6000 g/mol, Kettenverlängerern und gegebenenfalls Vernetzern mit mindestens 2 gegenüber Isocyanat reaktiven Gruppen und einem Molekulargewicht unter 400 g/mol und hydrophilen, dispergieraktiven Verbindungen mit mindestens einer gegenüber Isocyanat reaktiven Gruppe und welches dadurch gekennzeichnet ist, daß es sich bei mindestens 70 Gew.-% der Dihydroxylverbindungen mit einem Molekulargewicht von 400 bis 6000 g/mol um Polyesterdiole handelt, bei denen mindestens 30 Mol% der zum Aufbau der Polyesterdiole eingesetzten Dicarbonsäuren aromatische Dicarbonsäuren sind, zum Verkleben von Polystyrol mit polaren oder unpolaren Materialien.

Weiterhin betrifft die Erfindung wäßrige Dispersionen, enthaltend
- 50 bis 95 Gew.-%: des voranstehend definierten Polyurethans und
- 5 bis 50 Gew.-%: eines entsprechend aufgebauten Polyurethans, mit dem Unterschied, daß es sich bei mindestens 70 Gew.-% der Dihydroxylverbindungen mit einem Molekulargewicht von 400 bis 6000 g/mol um Polyalkylenoxiddiole handelt,
und die Verwendung dieser wäßrigen Dispersion als Klebstoffe.

Klebstoffe sollen möglichst vielfältig einsetzbar sein und sich daher zum Verkleben unterschiedlichster Substrate eignen. Gewünscht sind Klebstoffe mit denen sich auch ohne Vorbehandlung der zu verklebenden Oberflächen dauerhafte und gute Haftfestigkeiten erreichen lassen.

Von zunehmender Bedeutung sind Klebstoffe auf Basis wäßriger Dispersionen, mit denen sich Lösemittelabfälle und -emissionen vermeiden lassen.

Als solche sind z.B. aus der DE-A-38 27 378 und DE-A-39 42 681 wäßrige Polyurethandispersionen als Klebstoffe bekannt. Während in der DE-A-38 27 378 Polytetrahydrofuran als wesentliche Polyolaufbaukomponente für das Polyurethan genannt wird, handelt es sich bei der DE-A-39 42 681 um ein Polyurethan, welches ein Polycarbonatdiol als Polyol enthält.

Die bisher bekannten Klebstoffe auf Basis wäßriger Polyurethandispersionen erfüllen jedoch die vielseitigen Anforderungen an einen Klebstoff noch nicht in ausreichendem Maße.

So ergeben die Polyurethandispersionen der DE-A-38 27 378 und DE-A-39 42 681 nur unzureichende Haftfestigkeiten beim Verkleben von unpolaren Substraten, z.B. Polystyrol oder Polyvinylchlorid. Vor allem ist auch auf die ungenügende Beständigkeit der Verklebungen unter Feuchtigkeitseinwirkung hinzuweisen.

Polyurethandispersionen, welche Polyesterdiole auf Basis aromatischer Dicarbonsäuren als Polyolkomponente im Polyurethan enthalten, sind in der DE-A-35 16 806 beschrieben. Sie werden jedoch lediglich als Beschichtungsmittel eingesetzt.

Aromatische Dicarbonsäuren als mögliche Bestandteile von Polyesterpolyolen für den Aufbau von Polyurethanen sind weiterhin in der DE-A-27 44 544 und der US-A-4 203 883 erwähnt, jedoch werden keine Angaben über ihre Anteile im Polyol gemacht.

Aus der EP-A-3521 sind wäßrige Dispersionen von Polyurethanen mit einem Gehalt von Ammoniumionen oder Sulfonationen und Carboxylgruppen bekannt. Die Dispersionen finden als Klebstoffe Verwendung. In den Beispielen ist auch ein Polyurethan mit aromatischen Polyesterdiolen beschrieben.

Aufgabe der vorliegenden Erfindung waren Klebstoffe auf Basis wäßriger Polyurethane, welche sich zum Verkleben unterschiedlichster, auch unpolarer Substrate, wie Polystyrol, eignen. Des weiteren sollen die Verklebungen auch unter Feuchtigkeitseinwirkung eine gute Beständigkeit aufweisen.

Demgemäß wurden die eingangs definierten Verwendungen und die wäßrige Dispersion gefunden.

Aufbaukomponenten des Polyurethans für die erfindungsgemäße Verwendung sind im wesentlichen Polyisocyanate, Dihydroxylverbindungen mit einem Molekulargewicht von 400 bis 6000 g/mol und Verbindungen mit einem Molekulargewicht unter 400 g/mol und mindestens zwei gegenüber Isocyanat reaktiven Gruppen, wobei es sich um Hyroxyl-, primäre oder sekundäre Aminogruppen handelt. Als weitere Aufbaukomponente sind hydrophile, dispergieraktive Verbindungen mit mindestens einer oben genannten gegenüber Isocyanat reaktiven Gruppe zu nennen.

Als Polyisocyanate sind insbesondere aliphatische, cycloaliphatische und aromatische Diisocyanate geeignet. Vorzugsweise werden solche mit der allgemeinen Formel X(NCO)₂ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 7 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluoldiisocyanat.

Es können auch Gemische der Diisocyanate eingesetzt werden. Insbesondere haben sich Gemische von aliphatischen bzw. cycloaliphatischen Diisocyanaten mit aromatischen Diisocyanaten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden.

Bei den Diyhdroxylverbindungen mit einem Molekulargewicht von 400 bis 6000 g/mol handelt es sich zu mindestens 70 Gew.-%, vorzugsweise zu mindestens 90 Gew.-% um Polyesterdiole, bei denen mindestens 30 mol%, bevorzugt mindestens 50 mol% der zum Aufbau der Polyesterdiole eingesetzten Dicarbonsäuren aromatische Dicarbonsäuren sind.

Bei den Polyesterdiolen handelt es sich Umsetzungsprodukte von zweiwertigen Alkoholen mit zweiwertigen Carbonsäuren. Anstelle der freien Dicarbonsäuren können auch die entsprechenden Dicarbonsäureanhydride oder entsprechende Dicarbonsäureester von niederen Alkoholen oder deren Gemische zur Herstellung der Polyesterdiole verwendet werden.

Neben aromatischen Dicarbonsäuren können auch aliphatische, cycloaliphatische oder heterocyclische Dicarbonsäuren eingesetzt werden.

Als Beispiele für aromatische Dicarbonsäuren seinen insbesondere Phthalsäure, Isophthalsäure und Terephthalsäure genannt.

Bei den anderen Dicarbonsäuren kann es sich z.B. um Bernsteinsäure, Adipinsäure, Korksäure, Azelainsäure, Sebacinsäure, Maleinsäure, Fumarsäure und dimere Fettsäuren handeln.

Als Alkohole für die Polyesterdiole kommen z.B. Ethylenglykol, Propylenglykol-(1,2) und -(1,3), Butandiol-(1,4) und -(1,3), Pentandiol-(1,5), Hexandiol-(1,6), Octandiol-(1,8), Neopentylglykol, Cyclohexandimethanol (1,4-Bis-hydroxymethylcyclohexan), 2-Methyl-1,3-propandiol. Pentandiol-(1,5), ferner Diethylenglykol, Triethylenglykol, Tetraethylenglykol, Polyethylenglykol, Dipropylenglykol, Polypropylenglykol, Dibutylenglykol und Polybutylenglykole in Betracht.

Bevorzugt sind hier die linearen Dihydroxyalkane mit 3 bis 8 C-Atomen und endständigen Hydroxylgruppen.

Neben den oben genannten Polyesterdiolen können weitere Dihydroxylverbindungen Verwendung finden. Zu nennen sind beispielsweise Polythioether, Polylactone, Polyacetale, Polycarbonate, Polyesteramide und insbesondere Polyether mit 2 Hydroxylgruppen.

Die Polyetherdiole sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), 4,4'-Dihyroxy-diphenylpropan, Anilin erhältlich.

Der Anteil der Dihydroxylverbindungen mit einem Molekulargewicht von 400 bis 6000 g/mol wird insbesondere so gewählt, daß auf 1 Grammäquivalent Isocyanat 0,1 bis 0,8, besonders bevorzugt 0,15 bis 0,6 Gewichtsäquivalent der Dihydroxylverbindung, eingesetzt werden.

Bei den zum Aufbau des Polyurethans mitverwendeten Kettenverlängerern mit einem Molekulargewicht unter 400 g/mol handelt es sich im wesentlichen um Verbindungen, welche zwei Hydroxylgruppen, zwei primäre oder sekundäre Aminogruppen oder eine Hydroxyl- und eine primäre oder sekundäre Aminogruppe enthalten. In Betracht kommen z.B. die zur Herstellung der Polyesterdiole geeigneten Alkohole, Diamine wie Ethylendiamin, Hexamethylendiamin, Piperazin, 2,5-Dimethylpiperazin, 1-Amino-3-aminomethyl-3,5,5-trimethyl-cyclohexan (Isophorondiamin), 4,4'-Diaminodicyclohexylmethan, 2,4-Diamino-cyclohexan, 1,2-Diamino-propan, Hydrazin oder Aminoalkohole wie Ethanolamin, Isopropanolamin, Methylethanolamin oder Aminoethoxyethanol.

Der Anteil der Kettenverlängerer beträgt vorzugsweise 0,1 bis 0,8 Grammäquivalent besonders bevorzugt 0 bis 0,7 Grammäquivalent bezogen auf 1 Grammäquivalent Isocyanat.

Es können auch Aufbaukomponenten mitverwendet werden, die mehr als zwei gegenüber Isocyanat reaktive funktionelle Gruppen enthalten, in diesem Fall wirken die Verbindungen über die Kettenverlängerung hinaus als Vernetzer. Genannt seien z.B. Diethylentriamin oder 1,8-Diamino-4-aminomethyloctan.

Der Anteil dieser Vernetzer liegt im allgemeinen bei 0 bis 0,4, insbesondere bei 0 bis 0,1 Grammäquivalent pro Grammäquivalent Isocyanat.

Die hydrophilen, dispergieraktiven Verbindungen enthalten im Gegensatz zu den voranstehend beschriebenen Aufbaukomponenten hydrophile, dispergieraktive Gruppen. Es handelt sich insbesondere um Verbindungen mit einer Ionengruppe oder in eine Ionengruppe überführbaren Gruppe und mindestens einer gegenüber Isocyanat reaktiven Gruppe.

Geeignet sind z.B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel 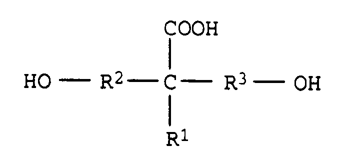
in welcher R¹ für ein Wasserstoffatom oder einen Alkylrest mit 1 bis 4 Kohlenstoffatomen und R² sowie R³ für eine C₁-C₄-Alkylengruppe stehen. Beispielsweise genannt sei 2,2-Dimethylolpropionsäure.

Erwähnenswert sind weiterhin eine oder zwei Hyroxylgruppen bzw. Aminogruppen enthaltende tertiäre Ammoniumsalze sowie Aminocarbonsäuren oder Aminosulfonsäuren, z.B. Lysin, β-Alanin, N-(2-Aminoethyl)-2-aminoethansulfonsäure und die in der DE-A-20 34 479 genannten Addukte von aliphatischen diprimären Diaminen an α-olefinische Carbonsäuren, z.B. das Addukt von Ethylendiamin an Acrylsäure.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Diemethylaminopropanol eingesetzt werden.

Zur Überführung der potentiellen kationischen Gruppen, z.B. der tertiären Aminogruppen in die entsprechenden Kationen, z.B. Ammoniumgruppen, sind als Neutralisiationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyljodid, Dimethylsulfat, Benzylchlorid, Chloressigethylester oder Bromacetamid geeignet. Weitere geeignete Neutralisations- und Quarternierungsmittel sind z.B. in der US-A 3 479 310, Spalte 6, beschrieben.

Gegebenenfalls können auch nichtionische Emulgatoren, wie einwertige Polyetheralkohole des Molgewichtsbereiches 500 bis 20 000 g/mol, vorzugsweise von 1 000 bis 5 000 g/mol als hydrophile, dispergieraktive Verbindungen verwendet werden.

Einwertige Polyetheralkohole sind durch Alkoxylierung von einwertigen Startermolekülen, wie z.B. Methanol, Ethanol oder n-Butanol erhältlich, wobei als Alkoxylierungsmittel Ethylenoxid oder Gemische von Ethylenoxid mit anderen Alkylenoxiden, besonders Propylenoxid, eingesetzt werden. Im Falle der Verwendung von Alkylenoxidgemischen enthalten diese jedoch vorzugsweise mindestens 40, besonders bevorzugt mindestens 65 mol% Ethylenoxid.

Durch die hydrophile, dispergieraktive Verbindung wird die Dispergierbarkeit des Polyurethans in Wasser gewährleistet. Ihr Anteil beträgt üblicherweise 0,03 bis 0,5 Grammäquivalent, vorzugsweise 0,05 bis 0,4 Grammäquivalent, bezogen auf 1 Grammäquivalent Isocyanat.

Die Anteile der Aufbaukomponenten des Polyurethans werden insbesondere so gewählt, daß die Summe der gegenüber Isocyanat reaktiven funktionellen Gruppen, d.h. der Hydroxyl- oder primären oder sekundären Aminogruppen 0,8 bis 1,2, bevorzugt 0,95 bis 1,05 Grammäquivalente gegenüber 1 Grammäquivalent Isocyanat beträgt.

Zur Herstellung des Polyurethans können die Aufbaukomponenten in einem niedrig siedenden, mit Wasser mischbaren organischen Lösungsmittel in bekannter Weise umgesetzt werden, wie es z.B. auch in der DE-A-34 37 918 beschrieben ist.

Als Lösungsmittel sind z.B. Tetrahydrofuran, Methylethylketon und insbesondere Aceton empfehlenswert.

Die Reaktionstemperatur liegt vorzugsweise bei 50 bis 100°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Die Überführung der in Ionengruppen überführbaren Gruppen in Ionengruppen erfolgt zweckmäßigerweise vor oder während der Dispergierung des Polyurethan in Wasser.

Nach der Dispergierung wird das organische Lösungsmittel durch Destillation im gewünschten Ausmaß, im allgemeinen nahezu vollständig, entfernt.

Die Herstellung des Polyurethans kann auch in der Weise erfolgen, daß in dem niedrig siedenden mit Wasser mischbaren organischen Lösungsmittel zunächst ein Polyurethanprepolymer hergestellt wird.

Dieses Prepolymer hat noch freie Isocyanatgruppen und besteht im wesentlichen aus dem Polyisocyanat, der Dihydroxylverbindung mit einem Molekulargewicht von 400 bis 6000 g/mol, der hydrophilen, dispergieraktiven Aufbaukomponenten und gegebenenfalls Kettenverlängerern und/oder Vernetzern. Vor oder während der Dispergierung des Prepolymeren in Wasser werden wiederum die in Ionengruppen überführbaren Gruppen in Ionengruppen überführt.

Nach Dispergierung des Prepolymeren in Wasser werden dann die noch freien Isocyanatgruppen mit weiteren Anteilen Kettenverlängerer oder Vernetzer, wobei es sich insbesondere um Verbindungen mit primären oder sekundären Aminogruppen als gegenüber Isocyanat reaktive Gruppe handelt, umgesetzt.

Der Feststoffgehalt der erhaltenen wäßrigen Polyurethandispersion liegt vorzugsweise zwischen 20 und 60 Gew.-%, besonders bevorzugt zwischen 30 und 50 Gew.-%.

Die wäßrige Polyurethandispersion wird als Klebstoff verwendet und kann für diese Verwendung noch weitere Zusätze, z.B. klebrigmachende Harze, wie Kolophoniumharze, Netzmittel, Verdicker, Entschäumer und gegebenenfalls Hilfslösemittel enthalten.

Sie eignet sich zum Verkleben unterschiedlichster Substrate, z.B. von Papier, Holz, Textilstoffe, Gummi, Leder, Glas, Metall und Kunststoffen wie Polyvinylchlorid, Polystyrol, Polyolefinen und Polyacrylaten, z.B. Polymethylmethacrylat. Die verklebten Substrate können aus gleichem Material oder unterschiedlichem Material sein. Insbesondere eignen sich die Dispersionen zum Verkleben von unpolaren mit polaren bzw. unpolaren mit unpolaren Materialien.

Als unpolare Materialien seien beispielsweise die voranstehend aufgezählten Kunststoffe, insbesondere Polystyrol, genannt.

Die Verklebungen weisen eine besonders gute Haftfestigkeit, auch unter Feuchtigkeitseinwirkung auf.

Eine weitere Verbesserung der Haftfestigkeit z.B. auf Polystyrol kann überraschenderweise noch mit einer wäßrigen Dispersion, welche eine Mischung des voranstehend beschriebenen Polyurethans (Polyurethan A) mit einem weiteren Polyurethan (Polyurethan B) enthält, erreicht werden. Das Polyurethan B ist entsprechend Polyurethan A aufgebaut, d.h. ist im wesentlichen aufgebaut aus den gleichen Aufbaukomponenten, mit dem Unterschied, daß es sich bei mindestens 70 Gew.-% der Dihyroxylverbindungen mit einem Molekulargewicht zwischen 400 und 6000 g/mol um Polyalkylenoxiddiole handelt.

Insbesondere in Betracht kommen Polyalkylenoxiddiole von C₂ bis C₄-Alkylenoxiden, besonders bevorzugt von Propylenoxid.

Die obige Dispersion enthält vorzugsweise 50 bis 95 Gew.-%, besonders bevorzugt 70 bis 95 Gew.-% des Polyurethans A und vorzugsweise 5 bis 50 Gew.-%, besonders bevorzugt 5 bis 30 Gew.-% des Polyurethan B.

Der Feststoffgehalt der Dispersion liegt in den oben angegebenen Bereichen.

### Beispiele

### Polyurethandispersion mit aromatischen Polyesterdiolen

### Beispiel 1

387 g (0,20 mol) eines Polyesterdiols aus Adipinsäure, Isophthalsäure und Hexandiol-1,6, OH-Zahl (OHZ) 58; Molverhältnis Adipinsäure/Isophthalsäure = 1/1), 63 g (0,7 mol) Butandiol-1,4 und 100 g Aceton wurden gemischt. Bei 50°C wurden 233 g (1,05 mol) Isophorondiisocyanat zugegeben und auf 70°C erhitzt. Nach 265 min wurden 0,1 g Dibutylzinndilaurat (DBTL) zugegeben. 90 min nach der DBTL-Zugabe wurde mit 560 g Aceton verdünnt und 50°C eingestellt. Dann wurden 66 g (0,30 Äquivalente NH) einer 40 %igen wäßrigen Lösung des Adduktes von Ethylendiamin an Natrium-acrylat zugegeben und nach 10 min Rühren mit 1200 g Wasser innerhalb von 50 min dispergiert. Anschließend wurde das Aceton im Vakuum abdestilliert.

Man erhielt eine feinteilige Dispersion mit einem Feststoffgehalt von 36 Gew.-%.

### Beispiel 2

400 g (0,40 mol) eines Polyesterdiols aus Adipinsäure, Isophthalsäure und Hexandiol-1,6 (OHZ 112; Molverhältnis Adipinsäure/Isophthalsäure = 1/1), 53,6 g (0,4 mol) Dimethylolpropionsäure (DMPA) und 80 g Butanon wurden gemischt, bei 50°C wurden dann 233 g (1,05 mol) Isophorondiisocyanat (IPDI) zugegeben und bei 90°C gerührt. Nach 140 min wurde mit 700 g Aceton verdünnt und auf 30°C gekühlt. Dann wurden 28,5 g (0,32 mol) Dimethylethanolamin (DMEA) zugegeben und nach 10 min Rühren mit 1000 g Wasser innerhalb von 10 min dispergiert. Nach der Wasserzugabe wurde ein Gemisch aus 21 g (0,125 mol) Isophorondiamin (IPDA) und 8,6 g (0,0833 mol) Diethylentriamin (DETA) zugegeben. Anschließend wurde das Aceton im Vakuum abdestilliert.

Man erhielt eine feinteilige Dispersion mit einem Feststoffgehalt von 40 Gew.-%.

Mischungen der Polyurethandispersion mit aromatischen Polyesterdiolen und einer Polyurethandispersion mit Polypropylenoxiddiolen

### Beispiel 3

Eine Mischung aus 34,8 kg 2,4-Toluylendiisocyanat, 8,7 kg 2,6-Toluylendiisocyanat, 200 kg Polypropylenoxiddiol (Mₙ = 2000), 20,1 kg DMPA und 0,1 kg Dibutylzinndilaurat wurde während 5 h bei 95°C umgesetzt. Anschließend wurde auf 39°C abgekühlt und der Gehalt an nicht umgesetzten NCO-Gruppen zu 0,148 Gew.-%, bezogen auf die Reaktionsmischung bestimmt. Danach wurde mit 200 kg Aceton verdünnt und 15,1 kg Triethylamin sowie 625 kg Wasser eingerührt. Nach destillativer Entfernung des Acetons wurde eine ca. 31 gew.-%ige klare, wäßrige PU-Dispersion erhalten.

10 Gew.-Teile der erhaltenen Polyurethandispersion mit Polypropylenoxiddiol wurden mit 56 Gew.-Teilen der Dispersion aus Beispiel 2 gemischt.

Der Gewichtsanteil der Polyurethandispersion mit dem Polypropylenoxiddiol am Feststoffgehalt betrug 12,2 Gew.-%.

### Vergleichsbeispiel 1

312 g (0,16 mol) Polytetrahydrofuran (OHZ 56), 62,2 g (0,464 mol) Dimethylolpropionsäure und 60 g Butanon wurden gemischt; bei 50°C wurden 196 g (0,88 mol) Isophorondiisocyanat zugegeben und dann bei 90°C gerührt. Nach 105 min wurde mit 200 g Aceton verdünnt und 60°C eingestellt. Nach der Zugabe von 46,5 g (0,46 mol) N-Methylmorpholin wurde noch 30 min gerührt und dann mit 900 g Wasser innerhalb von 30 min dispergiert. Anschließend wurde das Aceton im Vakuum abdestilliert.

### Vergleichsbeispiel 2

Beispiel 2 wurde wiederholt, wobei der Polyester aus Adipinsäure, Isophthalsäure und Hexandiol-1,6 (OHZ 112; Molverhältnis Adipinsäure/Isophthalsäure = 1/1) durch eine äquivalente Menge eines Polyesters aus Adipinsäure und Hexandiol-1,6 (OHZ 112) ersetzt wurde.

### Vergleichsbeispiel 3

Beispiel 2 wurde wiederholt, wobei der Polyester aus Adipinsäure, Isophthalsäure und Hexandiol-1,6 (OHZ 112; Molverhältnis Adipinsäure/Isophthalsäure = 1/1) durch eine äquivalente Menge eines Polyesters aus Adipinsäure, Isophthalsäure und Hexandiol-1,6 (OHZ 112; Molverhältnis Adipinsäure/Isophthalsäure = 85/15) ersetzt wurde.

### Prüfung der Scherfestigkeit nach Feuchtigkeitslagerung

Die Dispersionen wurden auf Buchenholz (Fläche 100 x 200 mm) mit einem Rakel (1,5 mm Zahnung) aufgerakelt und innerhalb einer Minute mit Prüfkörpern aus Aluminium, Schwarzblech, Hart-PVC, Polystyrol oder Buchenholz überlappend (20 x 20 mm) verklebt (Belastung 200 g auf der verklebten Fläche). Vor dem Auftrag der Dispersion wurden die Prüfflächen mit Sandpapier (Körnung 120) aufgerauht.

Die Prüfkörper wurden 1 Tag im Normklima (23°C, 50 % relative Luftfeuchtigkeit) und anschließend 3 Tage bei 50°C und 80 % relative Luftfeuchtigkeit gelagert. Vor der Bestimmung der Scherfestigkeit wurden die Prüflinge noch 2 Stunden bei Normklima gelagert.

Mit einer Abzugsgeschwindigkeit von 10 mm/min wurde die Kraft in N/mm² bestimmt, die zum Abziehen der Prüfkörper in Längsrichtung notwendig war.

**Tabelle**

| Scherfestigkeit nach Feuchtigkeitslagerungen | | | | | | |
|---|---|---|---|---|---|---|
| | Beispiele | | | Vergleichsbeispiele | | |
| | 1 | 2 | 3 | 1 | 2 | 3 |
| Buchenholz | 6,9 | 7,2 | 7,2 | 4,3 | 7,1 | 8,5 |
| Aluminium | 7,3 | 6,9 | 7,3 | 6,0 | 6,7 | 8,4 |
| Schwarzblech | 7,8 | 4,8 | 8,0 | 6,5 | 5,8 | 5,2 |
| PVC | 6,7 | 4,0 | 4,8 | 0,6 | 4,2 | 7,4 |
| Polystyrol | 3,6 | 3,3 | 3,7 | 3,0 | 0,5 | 0,7 |

Bei Dispersionen auf Basis Polyesterdiolen, die keine oder nur geringe Anteile an aromatischen Dicarbonsäuren enthalten, sind die Klebfestigkeiten z.B. auf Polystyrol völlig unzureichend.

Hervorzuheben ist, daß die erfindungsgemäßen Dispersionen ein ausgewogenes Haftungsspektrum - insbesondere unter Feuchtigkeitseinwirkung - aufweisen, das weitgehend unabhängig von den zu verklebenden Materialien ist.

## Patentansprüche

1. Verwendung einer wäßrigen Dispersion, enthaltend ein Polyurethan, welches im wesentlichen aufgebaut ist aus Polyisocyanaten, Dihydroxylverbindungen mit einem Molekulargewicht von 400 bis 6000 g/mol, Kettenverlängerern und gegebenenfalls Vernetzern mit mindestens 2 gegenüber Isocyanat reaktiven Gruppen und einem Molekulargewicht unter 400 g/mol und hydrophilen, dispergieraktiven Verbindungen mit mindestens einer gegenüber Isocyanat reaktiven Gruppe und welches dadurch gekennzeichnet ist, daß es sich bei mindestens 70 Gew.-% der Dihydroxylverbindungen mit einem Molekulargewicht von 400 bis 6000 g/mol um Polyesterdiole handelt, bei denen mindestens 30 Mol% der zum Aufbau der Polyesterdiole eingesetzten Dicarbonsäuren aromatische Dicarbonsäuren sind, zum Verkleben von Polystyrol mit polaren oder unpolaren Materialien.

2. Verwendung einer wäßrigen Dispersion nach Anspruch 1, wobei es sich bei den aromatischen Dicarbonsäuren um Phthalsäure, Isophthalsäure, Terephthalsäure oder deren Gemische handelt.

3. Verwendung einer wäßrigen Dispersion, enthaltend
A) 50 bis 95 Gew.-% eines Polyurethans gemäß Anspruch 1 und
B) 5 bis 50 Gew.% eines Polyurethans gemäß Anspruch 1, mit dem Unterschied, daß es sich bei mindestens 70 Gew.-% der Dihydroxylverbindungen mit einem Molekulargewicht von 400 bis 6000 g/mol um Polyalkylenoxiddiole handelt,
wobei sich die Gewichtsangaben auf die Summe von A) und B) beziehen, als Klebstoff.

4. Wäßrige Dispersionen, enthaltend
A) 50 bis 95 Gew.-% eines Polyurethans gemäß Anspruch 1 und
B) 5 bis 50 Gew.-% eines Polyurethans gemäß Anspruch 1, mit dem Unterschied, daß es sich bei mindestens 70 Gew.-% der Dihydroxylverbindungen mit einem Molekulargewicht von 400 bis 6000 g/mol um Polyalkylenoxiddiole handelt,
wobei sich die Gewichtsangaben auf die Summe von A) und B) beziehen.

5. Verbund von Substraten, erhältlich durch Verwendung einer wäßrigen Dispersion gemäß einem der Ansprüche 1 bis 3.
